# EUROPEAN PATENT APPLICATION

(11) **EP 4 786 805 A1**
(43) Date of publication of application: **05.08.2026**
(21) Application number: 25155267.5
(22) Date of filing: 31.01.2025
(51) Int. Cl.: F16B 19/08

(54) **SELF-PIERCING RIVET FOR MAKING A JOINT, METHOD FOR MAKING THE JOINT AND SELF-PIERCING RIVETED JOINT**

(71) Applicant: Newfrey LLC, New Britain, CT 06053 (US)
(72) Inventor: Sartisson, Vadim, 35394 Gießen (DE); Reis, Christian, 35394 Gießen (DE); Eissara, Bah, 35394 Gießen (DE)
(74) Representative: Haarpatent Patentanwälte Krämer Meyer

(57) **Abstract**

A self-piercing rivet (1) for producing a joint has a rectangular or trapezoidal basic shape and comprises a rivet head (2) and a rivet shaft (3). The rivet shaft (3) consists of two shaft legs (4) which are spaced apart and project vertically from the rivet head (2) in one direction. The rivet head (2) and the shaft legs (4) delimit a recess (7), the opening (8) of which opens into the side opposite the rivet head (2). The shaft legs (4) taper in width from the rivet head (2) towards their shaft leg bases (9), but remain constant in height, wherein the shaft leg bases (9) each have a wedge-shaped end (23) arranged on the outside near the side surfaces (5) or near the recess. The shaft legs (4) are adapted to spread inwards or outwards during joining.

## Description

The invention relates to a self-piercing rivet for producing a joint with a rivet head and a rivet shaft that extends in two shaft legs. The invention also relates to a method for producing the joint and a self-piercing riveted joint.

Two components can be joined using self-piercing rivets. No pre-piercing of the components is required for self-piercing riveting. Solid rivets or semi-tubular rivets are used, for example. In self-pierce riveting with a semi-tubular rivet, the rivet is pressed through the first component and deforms the second component, in particular a sheet metal. The rivet expands and the second component forms a closing head for the rivet. During the riveting process, the joint rests on a die as a counterholder.

A self-piercing rivet is for example disclosed in US 6 325 584 B1, in which the rivet comprises a rivet head (also called flange) with a large diameter and a shank with a hollow cavity extending from the flange inward, in which the end of the shank pierces a plurality of workpieces, becomes deformed and expands outwardly in the radial direction, remaining inside the final workpiece without passing through.

Steel sheets can be joined together with semi-tubular rivets made of steel. These steel rivets have a pointed foot to allow easy penetration into the parts to be joined. A self-piercing rivet with a pointed foot is described, for example, in DE 44 31 769 A1, wherein the self-piercing rivet is intended for joining sheets of higher strength and is made is usually made from hardened and tempered steel.

EP 0 833 063 A1 describes a semi-tubular rivet made of light metal for joining light metal parts. In contrast to the commonly used self-piercing rivets made of steel, this has a blunt rivet foot rather than a pointed one. Typically, such a light metal semi-tubular self-piercing rivet has an ultimate tensile strength of around 450N/mm. This tensile strength is therefore significantly lower than that of a semi-tubular self-piercing rivet made of steel, which usually has a tensile strength of around 1400N/mm. Due to this high tensile strength, steel rivets can punch through and join normal steel sheets with a tensile strength of up to 500N/mm.

US 7,736,110 B2 discloses a staple for fastening together metal sheets comprising a length of round wire bent at the ends to form spaced depending metal legs. Each leg has a metal piercing tip at its end so that a first sheet is completely pierced and a second sheet is at least partially pierced, whereby the legs continue to spread during piercing to a splayed position in which the legs are anchored in the metal sheets, thereby securing the metal sheets together. Due to the use of round wire, unwanted deformation of the legs during driving cannot be prevented.

The problem with the well-known semi-tubular self-pierce rivets is that the production of the rivets is complex and cost-intensive. In addition, a large amount of force is required to set the semi-tubular self-pierce rivets. The known semi-tubular self-pierce rivets can produce a significant undercut (also called interlock) when there is a large expansion, particularly if the lower material (on the die side) is thin. However, excessive expansion increases the risks of cracking. Another disadvantage is that semi-tubular self-pierce rivets displace a lot of material outwards when they are set, which means that larger edge distances are required for joining.

The object of the invention is to provide a self-piercing rivet that is easy to manufacture, can be varied and easily adapted to different types of applications and does not have the disadvantages of the prior art.

The above-mentioned object is achieved by the self-piercing rivet defined in independent claim 1. Preferred embodiments are described in the dependent claims.

A self-piercing rivet for producing a joining connection is provided, having a rectangular or trapezoidal basic shape, a rivet head and a rivet shaft which comprises two shaft legs which are spaced apart from one another and project perpendicularly from the rivet head in one direction, and having a recess which is defined by the rivet head and the shaft legs and whose opening opens into the side opposite the rivet head, wherein the shaft legs taper in width from the rivet head to a shaft leg bases, but remain constant in height, especially remain a constant height over their length and width and wherein the shaft leg bases each have a wedge-shaped end arranged on the outside near the side surfaces or lying near the opening and wherein the shaft legs are adapted to spread inwards or outwards during joining. The self-piercing rivet according to the invention is inexpensive to manufacture and easy to store. In addition, tests have shown that it can be used for joining various structural components and achieves stable connections. The self-piercing rivet is in particular directed to sheet metal application, notably in the automotive industry. Another advantage of the self-piercing rivet according to the invention is that the self-piercing rivet advantageously has a pronounced deformation in only one direction and advantageously only a very slight deformation in the other direction. In particular, this allows smaller edge distances to be realized during joining. It is advantageously possible to join two or more components using the self-piercing rivet according to the invention.

In a preferred embodiment, two side surfaces of the shaft legs are aligned parallel to one another. This allows the self-piercing rivet to be produced cost-effectively and ensures even penetration into the components with good material displacement at the same time. In an alternative embodiment, side surfaces of the shaft leg may have a slight angle.

In one embodiment, the shaft legs are designed in such a way that they spread outwards or inwards in a plane relative to the longitudinal center axis of the self-piercing rivet when the self-piercing rivet is set. This means that due to defined material properties and the geometry of the self-piercing rivet, the spreading direction of the shaft legs can be advantageously defined. This deformation of the shaft legs achieves optimum flow behind the component material without penetrating it and ensures a stable connection. A further advantage is that the spreading of the shaft legs prevents the shaft legs from exiting for example the last component and thus prevents damage to the joined workpiece.

The advantageous wedge-shaped form of the shaft leg bases makes it possible to influence the spreading of the self-piercing rivet. The spreading can be influenced for example, by amending the angle of the wedge-shaped form. Depending on the design, the shaft legs of the self-piercing rivet spreads outwards or inwards, that is, towards or away from the longitudinal axis of the self-piercing rivet. The term "spreading" in the context of the invention refers to the movement of the shaft legs towards or away from the longitudinal axis of the self-piercing rivet during joining. Movement of the shaft legs in the direction of the longitudinal axis can also be referred to as "compression" in the context of the invention.

In one embodiment, the width of the rivet head and the width of the rivet shaft are identical. It is further preferred, that the self-piercing rivet has an essentially constant height based on its overall linear and lateral expansion. As a result, the self-piercing rivet has a constant stiffness over its dimensions. The staple-shaped rivets known from the prior art cannot ensure constant deformation due to the fact that they are made from a wire with a round cross-section. This advantageous design also simplifies the production of the self-piercing rivet. It is preferred that the extent of the self-piercing rivet in the height direction is less than its extent in the length and width direction. In the sense of the invention, the terms thickness and height are used interchangeably.

The self-piercing rivet is preferably made from a sheet metal or produced by an extrusion molding process. By using different types of sheet metal with different physical or chemical properties, optimized self-piercing rivets can be provided for an application. Materials that cannot be cold-formed, such as stainless steels, can be used. This means that the materials do not need to be coated. Hardened sheet metal can also be used as a material for the self-piercing rivet. Preferably, the self-piercing rivet is stamped from a sheet metal or manufactured by an extrusion process. It is also possible to cut the self-piercing rivet from a sheet using cutting technologies such as laser cutting. Furthermore, the self-piercing rivet can be produced using a rolling process. The preferred manufacturing process makes it easy to change the surface contour of the self-piercing rivet.

In one embodiment of the self-piercing rivet, a rivet head can have a flange that protrudes laterally over the rivet shaft. The flange can be designed as a countersunk or protruding head. This can lead to better load bearing capacity of the joint.

Furthermore, it is preferred, that at least one surface of the self-piercing rivet has at least partial structuring. For example, a surface of the self-piercing rivet may be a side surface, a front or back surface, the upper side of the rivet head or the surface enclosing the recess. Such structuring may, for example, be recesses, elevations, corrugations, beads or other elements or any other variations of a planar surface. For the purposes of the invention, the side surfaces refer to the surfaces of the longitudinal sides. For a shape deviating from a rectangular basic shape, e.g. a square shape, the side surfaces can also be referred to here. There may be recesses in the form of grooves, notches or the like, which influence the flow behind the structural components to be joined. Furthermore, there may be recesses or elevations arranged at a distance from one another on a side of the self-piercing rivet.

There is a recess between the shaft legs, delimited by the rivet head. In one embodiment, the recess between the shaft legs is rounded upwardly in the direction of the rivet head. In one embodiment, however, the upper part of the recess can also be tapered. There may be recesses, elevations, edges or the like arranged at a distance from one another on the sides of the shaft legs defining the recess.

The invention also concerns a method for joining at least two structural components, each of which is designed to be flat at least on one joining surface, wherein a first structural component is brought into contact with the joining surface of a second structural component by means of its joining surface, wherein a self-piercing rivet as described is placed by means of a setting device over the joining surface of the first structural component and joins the structural components to one another, wherein the shaft legs spread inwards or outwards during joining. The method enables two structural components to be joined efficiently using a self-piercing rivet. A significant advantage is that the design of the self-piercing rivet allows different materials to be joined together. Reference is also made to the preferred designs of the self-piercing rivet and their advantages, which are also applicable to the method.

It is preferred, that prior to the joining the first component and/or the lower or second component in the region of the joining surface is heat-treated, in particular via plasma, in such a way that a heat-affected zone is formed on the joining surface of the, preferably at least first component, and in that the first component and/or the lower or second component is heated in such a way that the strength of the first component and/or the lower or second component in the heat-affected zone is reduced. The treatment can be carried out using a plasma torch to deliver plasma. Such a beneficial pretreatment of at least a region of at least one component is disclosed, for example, in WO 2018/055210 A1, the disclosure of which is expressly incorporated by reference. However, other pretreatment methods are possible, e.g. with a laser or induction. The lower or second component is the component arranged at the die side.

The invention also relates to a self-piercing riveted joint with at least two structural components that are connected to one another by means of a self-piercing rivet as described, which has a rivet head and an adjoining rivet shaft with two shaft legs, wherein the shaft legs are spread inwards or outwards in the self-piercing riveted joint. The shaft legs are spread outwards or inwards in relation to a longitudinal axis of the self-piercing rivet. The self-piercing rivet's diverse design options allow for the creation of stable joints. Furthermore, joints can also be created in places where only a small amount of material can be displaced or where it would be disadvantageous if the self-piercing rivet were to protrude from the connected structural components.

The two components are preferably two components with at least flat joining surfaces on which the components lie against each other, preferably metal sheets, in particular preferably metal sheets of a vehicle body. Reference is made to the preferred embodiments of the self-piercing rivet and their advantages, which are also applicable to the self-piercing riveted joint. When the self-piercing rivet is used for joining two components, it can be advantageous if the self-piercing rivet only penetrates the first structural component at least partly. However, it may also be provided that the self-piercing rivet penetrates the first and the second structural component at least partly. In another design, in which the self-piercing rivet is intended to join several components, it may be advantageous if the self-piercing rivet does not penetrate the last component furthest from the point of penetration.

The invention is explained in more detail below with reference to an embodiment of the invention, which is shown in the drawing. It shows
- Figure 1: a top view of a design of a self-piercing rivet,
- Figure 2: a perspective view of a design of a self-piercing rivet,
- Figure 3: a top view of a design of a self-piercing rivet with a countersunk head,
- Figure 4: a top view of a design of a self-piercing rivet with recesses in the side surfaces,
- Figure 5: a side view of a design of a self-piercing rivet with recesses in the front and rear sides,
- Figure 6: a side view of a further embodiment of a self-piercing rivet with groove-shaped recesses in the front and rear sides,
- Figure 7: a front view of a design of a self-piercing rivet with structured pattern on the front side,
- Figure 8: a front view of a design of a self-piercing rivet with structuring on the shaft legs,
- Figure 9: a front view of a design of a self-piercing rivet with wedge-shaped tips on the inside,
- Figure 10: a front view of a design of a self-piercing rivet with structuring on the inside of the recess,
- Figure 11: a front view of a design of a self-piercing rivet with wedge-shaped tips on the outside,
- Figure 12: a front view of a design of a self-piercing rivet with structuring on the side surfaces of the shaft legs and,
- Figure 13-15: schematic representation of method steps for incorporating a shaft leg into structural components.

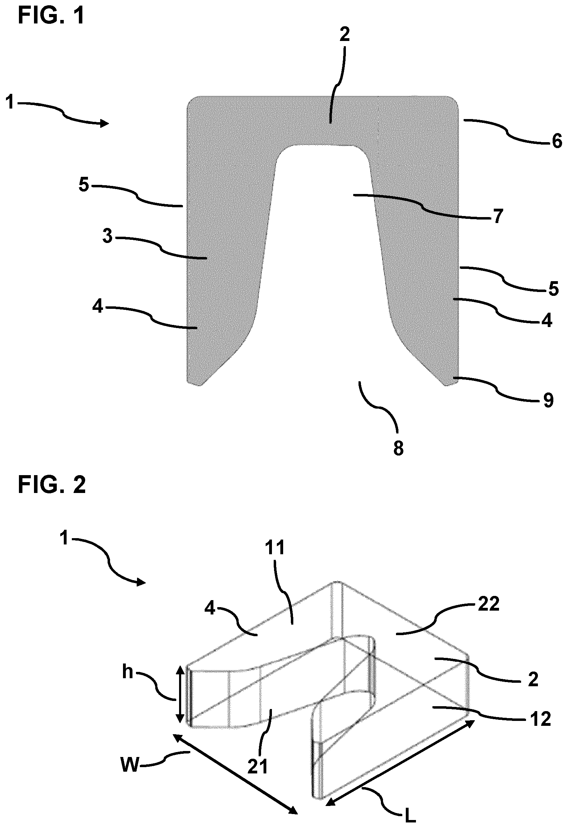

Figure 1 shows a top view of one embodiment of a self-piercing rivet and Figure 2 a perspective view of another embodiment of a self-piercing rivet. The self-piercing rivet 1 can have a rectangular basic shape with opposing long sides and narrow sides. Of course, a square basic shape is also possible. In another embodiment, the self-piercing rivet may have a trapezoidal shape. The basic shape refers to the one-dimensional view of the self-piercing rivet 1 shown in Figure 1.

A rivet head 2 is present at a first end of the self-piercing rivet 1, from which a rivet shaft 3 extends in an axial direction to a longitudinal axis of the self-piercing rivet 1 in the form of two shaft legs 4 up to a second free end of the self-piercing rivet 1. The rivet head 2 has a rectangular bridge or yoke-like design and connects the two shaft legs 4. The outer corners of the rivet head 2 can be rounded.

The shaft legs 4 are aligned perpendicular to the rivet head 2, i.e. a rivet head longitudinal axis, which runs transverse to the longitudinal axis of the self-piercing rivet 1. In the embodiment shown, the shaft legs 4 with their outer side surfaces 5 together with the side surfaces 6 of the rivet head 2 form the longitudinal sides of the self-piercing rivet 1. The side surface 5 of the rivet shaft 3 merges seamlessly into the side surface 6 of the rivet head 2, so that the rivet head 2 and rivet shaft 3 have preferably one width W. This means that the width W of the self-piercing rivet 1 remains preferably constant over its length in the unspread state of the self-piercing rivet 1. The side surfaces 5, 6, in particular the longitudinal sides of the self-piercing rivet 1 can be aligned parallel to each other in one embodiment. However, it can also be advantageous if the side surfaces 5, 6 are not parallel to each other.

The shaft legs 4 laterally delimit a recess 7, which extends axially from the rivet head 2 along the entire length L of the rivet shaft 3 along the center axis of the self-piercing rivet 1 and opens into an opening 8, which is opposite the rivet head 2. In the embodiment shown, the recess 7 runs radially to the center axis and widens continuously from the rivet head 2 to the opening 8. However, an essentially straight connection between the shaft legs 4 is also possible. In principle, the opening 8 is arranged on a narrow side of the self-piercing rivet 1. The upper end of the recess 7, which borders on the rivet head 2, can be designed differently and can be rounded, for example. For the purposes of the invention, radial refers in particular to a direction outwards or inwards with respect to the longitudinal center axis of the self-piercing rivet. In other words, the shaft legs incline towards or away from the center axis.

The shaft legs 4 have their greatest width near the rivet head 2 and taper axially along the longitudinal axis of the self-piercing rivet 1 to their free ends. However, the outer side surfaces 5 of the shaft legs 4 remain parallel to each other, at least in the embodiment shown. Only the inner side surfaces of the shaft legs 4 extend towards the free end of the shaft legs 4 in straight sections that are curved towards the outer side surface 5. Thus, the shaft legs 4 have the smallest width at their free ends. The free ends of the shaft legs 4 extend radially to the longitudinal axis of the self-piercing rivet 1 in some areas, but do not extend beyond the side surfaces 5 of the shaft legs 4. In the embodiment shown, the shaft legs 4 are mirror-symmetrical to the center axis of the self-piercing rivet 1, which runs axially to the longitudinal axis.

The free ends of the shaft legs 4 or the rivet shaft 3 form the shaft leg bases 9, which can be designed at least partially as a flat, concave, convex or tapered surface.

The self-piercing rivet 1 is preferably made of metal and can be stamped or laser cut (or any similar technology) from a sheet, metal strip (coil) or rolled-up metal strip. It can also be manufactured using an extrusion process, a rolling process or a wire drawing process. Stainless steel or tempering steel can also be used for the self-piercing rivet 1, e.g. 37MnB4 or similar (hardenable) material. Alternatively, soft metals, e.g. from a coil can be used for the self-piercing rivet 1 and subsequently hardened.

As can be seen in the figures, the self-piercing rivet 1 has a thickness or height h that remains constant over its length L and width W, especially the self-piercing rivet 1 has a substantially constant height with respect to its longitudinal extent along the longitudinal axis and its lateral extent transverse to the longitudinal axis. This means that a cost-effective manufacturing process can be used, such as punching or cutting from a sheet metal. This advantageous manufacturing method makes it possible to easily change the contour or surface of the self-piercing rivet 1 with structuring, thereby influencing not only the penetration of the self-piercing rivet 1 into structural components, but also the flow behind. Thus, the setting behavior and the joint produced with the self-piercing rivet 1 can be positively influenced by simple measures.

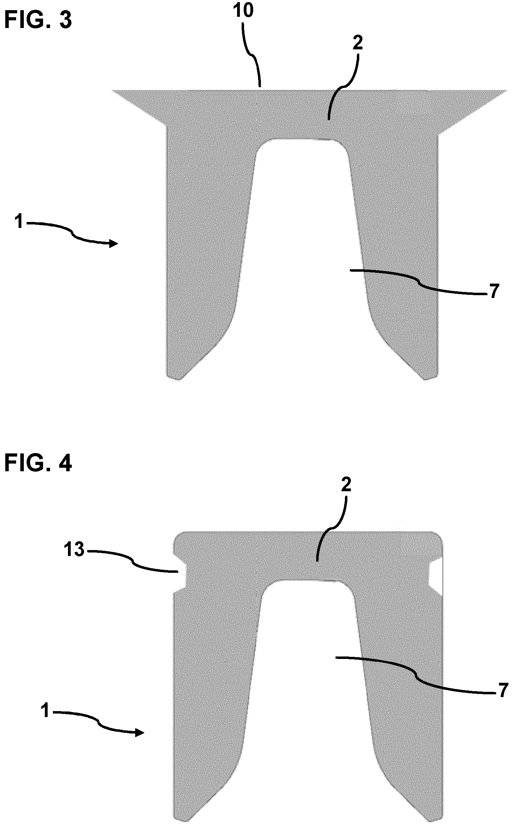

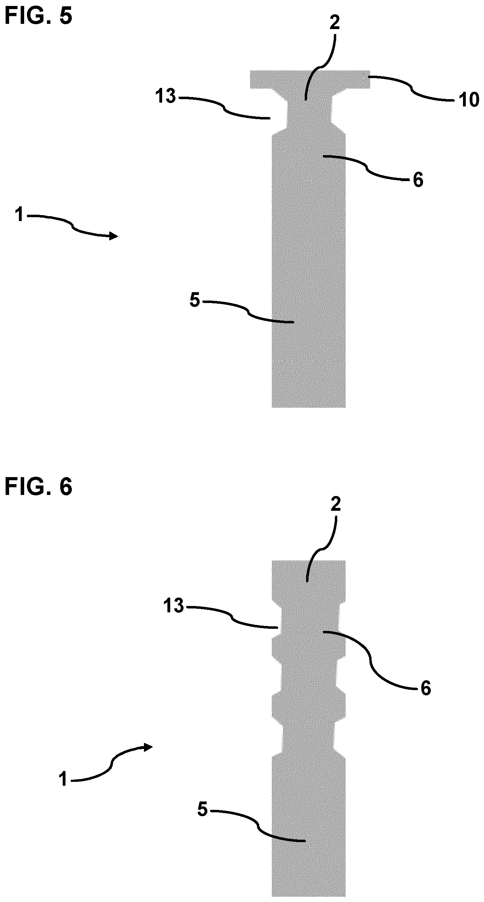

Figures 3 to 8 illustrate various embodiments of a self-piercing rivet 1. The self-piercing rivet 1 can have a flange 10 on its rivet head 2. The flange 10 can be designed as a countersunk head that widens conically from the side surfaces 6 of the rivet head 2. Furthermore, the self-piercing rivet 1 can have structuring, such as grooves, notches 13 and/or elevations on at least one of its surfaces, for example its side surfaces 5, 6, its front side 11 and/or its rear side 12, which are indicated by way of example in Figures 4, 5 and 6. Such structural changes of the contour of the surface can be provided in a simple manner during the manufacture of the self-piercing rivet 1 and support the setting of the self-piercing rivet 1 or the underflow of a structural component. This can also influence the spreading of the self-piercing rivet 1. By using structuring, a more stable connection of the structural components can be provided. In addition, an imprint, for example, as shown in Figure 5, can be used to create a flange 10 as well as a notch or groove 13. In principle, undercut structures can also be realized. Furthermore, the side surfaces can be designed as tapered edges, making it easier for the self-piercing rivet 1 to penetrate the structural component.

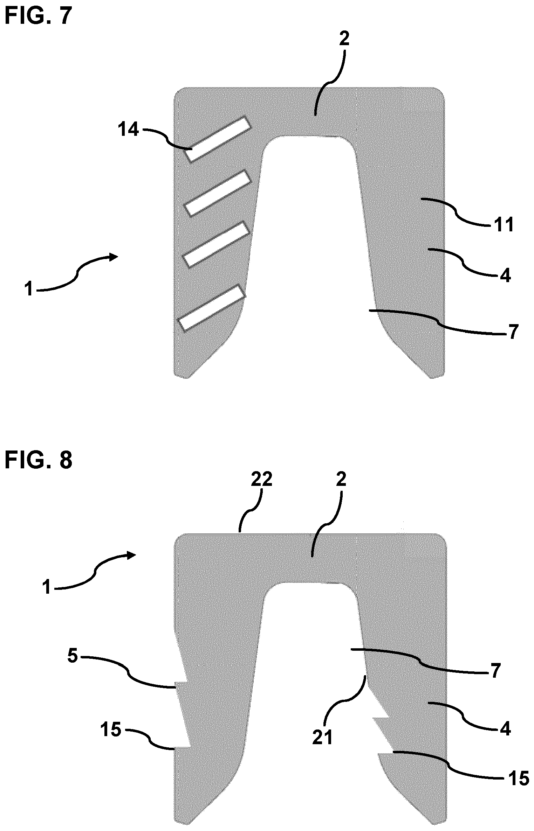

The stability of the self-piercing rivet 1 can be influenced by structuring, such as beads 14 or corrugations that are applied or introduced to the front and/or rear side 11, 12, which in turn influences the spreading and setting of the self-piercing rivet 1. Figure 8 shows structuring such as recesses 15 in the shaft legs 4, especially the surface 21 enclosing the recess, which also influence the flow behind the structural components to be joined and the stability of the joint. It is also possible to structure the surface of the rivet head 22. Modifying at least one surface 5, 6, 11, 12, 21, 22 of the self-piercing rivet 1 at least partly with structuring could improve the stability of the connection or joint. At this point, it should be noted that the configurations of the self-piercing rivet 1, especially the structuring can be combined with each other depending on the use of the self-piercing rivet 1.

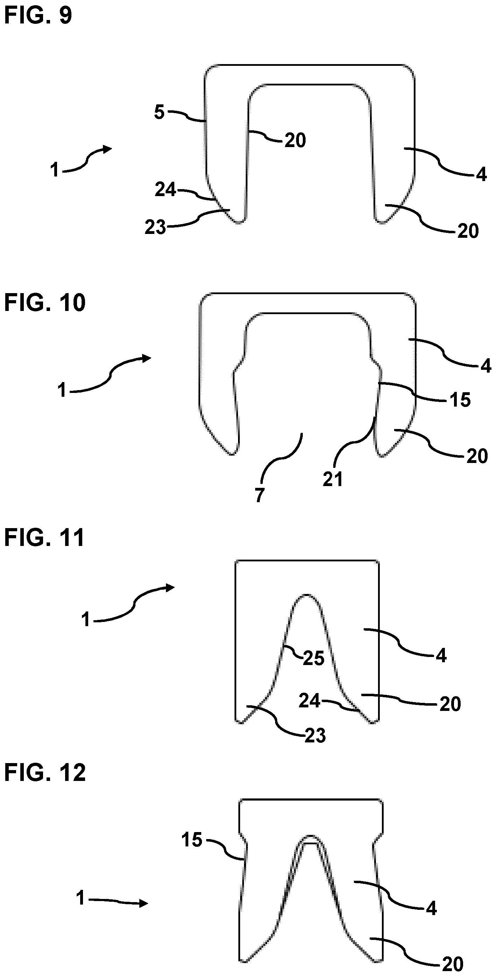

Figures 9-12 show further embodiments of the invention. Figures 9 and 10 show an example of a variant in which the shaft leg bases 9 have a wedge-shaped end 23 essentially close to the opening 8 and close to the recess 7. In contrast, figures 11 and 12 illustrate designs in which the wedge-shaped ends 23 are essentially close to the side surfaces 5 of the shaft legs 4. The geometry of the shaft legs 4, in particular that of the shaft leg tip 20, influences the spreading behaviour of the self-piercing rivet 1. If the wedge-shaped end 23 of the shaft leg bases 9 are essentially close to the opening 8, the shaft legs 4 tend to spread in the direction of the longitudinal center axis of the self-piercing rivet 1. In contrast, a geometry in which the wedge-shaped end 23 of the shaft leg bases 9 are essentially arranged close to the side surfaces 5 of the shaft legs 4 tends to favor spreading of the shaft legs 4 outwards relative to the longitudinally extending center axis.

Figure 10 also shows a design in which the inner surface 21 of the recess 7 has a structuring, such as a notch or recesses 15. A similar design is shown in figure 12, where the structuring is in the form of a recess 15 or notch on the side surfaces 5 of the shaft legs 4 near the rivet head 2. Such structuring can favor the flow of material around the rivet and a stable joint can be achieved. This can be particularly advantageous for thin components.

The wedge-shaped ends 23 are produced in particular by the shaft legs comprising at least one surface 24 inclined towards the longitudinal axis. Depending on the embodiment of the invention, the inclined surface 24 can be arranged near the side surfaces 5 of the shaft legs 4 or lying near the recess 7. In one embodiment of the invention, the side surfaces 5, 21 can advantageously run in parallel, at least in sections, for example, see figure 9. In another embodiment of the invention shown for example in figure 11, the shaft legs 4 have, in addition to the first inclined surface 24 mentioned, a second surface 25 inclined to the longitudinal axis, wherein the first inclined surface 24 forming the wedge-shaped ends 23 runs steeper than the second inclined surface 25. That is to say, in this embodiment, the first and second surfaces 24, 25 do not have the same angle of inclination to the longitudinal axis. The transition between the surfaces 24, 25 may be curved. The wedge-shaped ends 23 are formed in particular by a bevel of the shaft leg bases 9 of the self-piercing rivet 1, either from the shaft leg bases 9 in the direction of the side surface 5 or in the direction of the side surface 20 of the recess 7.

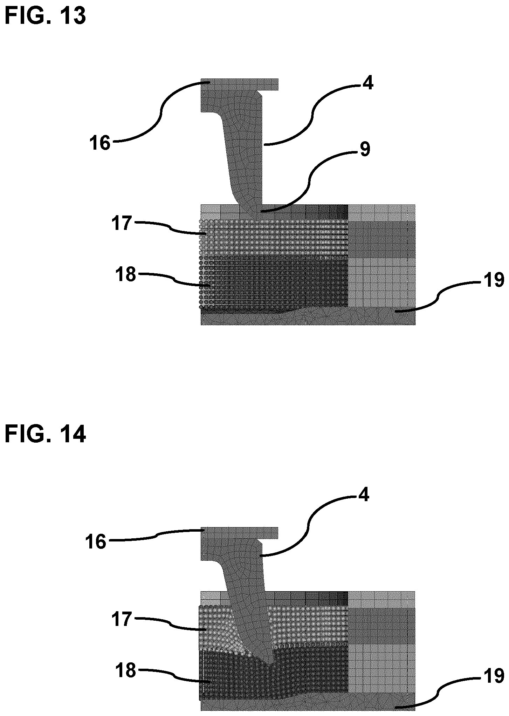

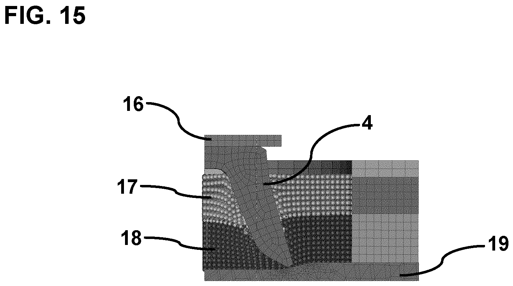

In the following, the setting of the self-piercing rivet 1 will be illustrated by way of example using figures 13-15. For the sake of simplicity, only one shaft leg 4 is shown. The self-piercing rivet 1 is set using a setting tool, which is only indicated. The setting tool basically has a punch and a hold-down device 16.

The design of the self-piercing rivet 1 according to the invention enables simple and cost-effective storage of the self-piercing rivet 1 in or on the setting tool. The structural components to be joined, namely a first and a second component 17, 18, are formed flat at least on their joining surface, so that the components 17, 18 lie against each other. The structural components 17, 18 can be designed as a sheet metal or car body part. The second structural component 18 rests on a die as a counterholder 19. The setting tool approaches the joining surface of the first structural component 17 axially and places the self-piercing rivet 1 on the joining surface using the hold-down device 16. A punch then presses the self-piercing rivet 1 into the intended joining surface, so that the shaft leg bases 9 of the self-piercing rivet 1 are pressed into the first structural component 17. The skilled person is aware that a certain amount of force is required for this, depending on the materials used, and that this can vary depending on the application and material. It can be advantageous to pretreat the joining area of at least one component 17, 18, for example by heat-treating a joining area or joining surface. This can be done, for example, by plasma, laser or induction treatment and can reduce the strength of the treated component 17, 18 in the heat-affected zone.

The self-piercing rivet 1 is spread due to its geometry and the die profile. The die forms the counterholder 19 to the punch. In an embodiment, an uninterrupted joining process, the self-piercing rivet 1 cuts at least partly through the upper structural component 17 and, while simultaneously expanding, plastically deforms the lower structural component 18 to form a closing head, the shape of which is essentially determined by the shape of the die engraving. Variants are also conceivable in which the upper component 17 is cut completely. In an embodiment, a die without engraving may be used (it then essentially functions like a flat block or anvil, primarily serving as a support).

The size of the self-piercing rivet 1, i.e. its dimensions, can be adapted to the application. In the embodiment shown, the shaft leg 4 penetrates the second structural component 18, but does not protrude through it. A section of the shaft leg 4 is basically located in the first structural component 17 and another section of the shaft leg 4 is located in the second structural component 18. The setting process is either completed upon contact or after a desired movement beyond the contact. In an embodiment, the setting process is completed when the rivet head 2 or a flange of the self-piercing rivet 1 basically comes into contact with the first structural component 17. Another embodiment may provide for the rivet head 2 to be pressed deeper into the upper structural component 17.

The structural components 17, 18 are joined together. In the embodiment shown, the shaft leg bases 9 do not protrude from the second structural component 18. This seals the finished workpiece against damage from air and water and protects the external appearance of the finished workpiece. However, it may also be advantageous if the shaft leg bases 9 of the two shaft legs 4 project completely through the second structural component 18. In a further embodiment, it may be provided that the spreading of the shaft legs 4 takes place to different degrees.

A key advantage of the self-piercing rivet 1 is its manufacture and its compact design. The self-piercing rivet 1 can be stamped out of a sheet at low cost, whereby contours such as embossed beads or the like can also be introduced. Furthermore, materials that cannot be cold-formed can be used, such as, but not limited to, stainless steels. The need for a coating can be omitted with this design. It is also possible to use a hardened sheet as the material. The self-piercing rivets 1 can be stored stacked, which saves space. Another advantage of the self-piercing rivet 1 is that the deformation of the material to be joined is very small. This makes it possible to realize very small edge distances and also to process materials with very limited ductility/formability. In addition, significantly lower joining forces are required for joining with the preferred self-piercing rivet 1. Tests have shown that the force required to drive the self-piercing rivet 1 into structural components is only half that required for the self-piercing rivets known from the prior art. This means that only half as much force is required for joining with the self-piercing rivet 1. This has significant advantages, such as lower energy consumption and a smaller setting device.

The self-piercing rivet 1 offers several other advantages.

It may allow for the realization of small flanges and edge distances.

It may create a favorable tension situation when joining, which helps to avoid cracks in the material on the die side.

In fine blanking processes, multiple self-piercing rivets as disclosed above can be punched out in a single operation.

Materials that are unsuitable for cold forming can be used to make the self-piercing rivet 1.

It is also possible to manufacture such rivets from stainless steel, eliminating the need for subsequent coating or hardening. The starting material for the self-piercing rivet 1 can be processed first, such as by hardening, before the rivet is punched out.

The orientation of the rivet can be adjusted during setting to select directional properties.

The self-piercing rivet 1 is suitable for hybrid joining, as it can achieve only local adhesive displacement, resulting in a better adhesive bond with improved properties in hybrid joining, which combines bonding and mechanical joining.

As mentioned above, the use of self-piercing rivet 1 requires lower joining forces, allowing for smaller drives and C-frames compared to traditional rivets.

There is no interfering contour on the underside when using anvil dies, and the overall deformation of the joined components is minimal.

## Claims

1. Self-piercing rivet (1) for producing a joining connection having a rectangular or trapezoidal basic shape, a rivet head (2) and a rivet shaft (3) which comprises two shaft legs (4) which are spaced apart from one another and project perpendicularly from the rivet head (2) in one direction, and having a recess (7) which is defined by the rivet head (2) and the shaft legs (4) and whose opening (8) opens into the side opposite the rivet head (2), wherein the shaft legs (4) taper in width from the rivet head (2) to a shaft leg bases (9), but remain constant in height (h) and wherein the shaft leg bases (9) each have a wedge-shaped end (23) arranged on the outside near the side surfaces (5) or near the recess (7), wherein the shaft legs (4) are adapted to spread inwards or outwards during joining.

2. Self-piercing rivet (1) according to claim 1, **characterized in that** the self-piercing rivet (1) has a constant height with respect to its longitudinal extent along the longitudinal axis and its lateral extent transverse to the longitudinal axis.

3. Self-piercing rivet (1) according to one of the preceding claims, **characterized in that** the extent of the self-piercing rivet (1) in the height (h) direction is less than its extent in the length (L) and width (W) direction.

4. Self-piercing rivet (1) according to one of the preceding claims, **characterized in that** a flange (10) designed as a countersunk or protruding head and projecting laterally beyond the rivet shaft (3) is present on the rivet head (2).

5. Self-piercing rivet (1) according to one of the preceding claims, **characterized in that** at least one surface (5, 6, 11, 12, 21, 22) of the self-piercing rivet (1) has at least partial structuring.

6. Self-piercing rivet (1) according to one of the preceding claims, **characterized in that** the shaft legs (4) are designed to be mirror-symmetrical with respect to the center axis of the self-piercing rivet (1), which axis extends axially with respect to the longitudinal axis.

7. Self-piercing rivet (1) according to one of the preceding claims, **characterized in that** the recess (7) between the legs of the shaft is rounded upwardly in the direction of the rivet head (2).

8. Self-piercing rivet (1) according to one of the preceding claims, **characterized in that** the shaft leg bases (9) is designed at least partially as a flat, concave, convex or tapered surface.

9. Self-piercing rivet (1) according to one of the preceding claims, **characterized in that** the self-piercing rivet (1) is made from a sheet metal or produced by an extrusion molding process.

10. Method for joining at least two structural components (17, 18), each of which is designed to be flat at least on one joining surface, wherein a first structural component (17) is brought into contact with the joining surface of a second structural component (18) by means of its joining surface, wherein a self-piercing rivet (1) according to one of the preceding claims 1 to 9 is placed by means of a setting device over the joining surface of the first structural component (17) and joins the structural components (17, 18) to one another, wherein the shaft legs (4) spread inwards or outwards during joining.

11. Method according to claim 10, **characterized, in that** prior to the joining the first component (17) and/or the lower or second component (18) in the region of the joining surface is heat-treated in such a way that a heat-affected zone is formed on the joining surface of the first component (17), and **in that** the first component (17) and/or the lower component or second component (18) is heated in such a way that the strength of the first component (17) and/or the lower component or second component (18) in the heat-affected zone is reduced.

12. Self-piercing riveted joint with at least two structural components (17, 18) that are connected to one another by means of a self-piercing rivet (1) according to claims 1 to 9, which has a rivet head (2) and an adjoining rivet shaft (3) with two shaft legs (4), wherein the shaft legs (4) are spread inwards or outwards in the self-piercing riveted joint.

13. Self-piercing riveted joint according to claim 12, **characterized in that** the self-piercing rivet (1) only penetrates the first structural component (17) at least partly.

14. A self-piercing riveted joint according to claim 12, **characterized in that** the self-piercing rivet (1) penetrates the first and the second structural components (17, 18) at least partly.
